# EUROPEAN PATENT SPECIFICATION

(11) **EP 1 471 104 B1**
(45) Date of publication and mention of the grant of the patent: **08.10.2008**
(21) Application number: 04396023.6
(22) Date of filing: 29.03.2004
(51) Int. Cl.: C08J 9/30, C09J 5/08

(54) **Adhesive composition**
Klebezusammensetzung
Composition adhésive

(30) Priority: 28.03.2003 FI 20030466
(43) Date of publication of application: 27.10.2004
(73) Proprietor: Hexion Specialty Chemicals Oy, 82430 Puhos (FI)
(72) Inventor: Rainio, Jouni, 82430 Puhos (FI)
(74) Representative: Partio, Erja

(56) References cited:
- FR-A- 1 243 411
- US-A- 4 172 067

## Description

The present invention relates to an adhesive composition as defined in the preamble of claim 1, designed for use in the manufacture of wood-based sheets, such as plywood, scaleboard, blockboard, fibreboard, OBS board or equivalent.

In the present context, plywood refers to plywood, chipboard or a corresponding multi-layer product formed form at least three veneer layers placed one upon the other or crosswise and glued and pressed against each other to form plywood, chipboard or equivalent.

In prior art, various adhesives for use in woodboard industry are known. An example of known technology is the use of phenolic resin glues, such as phenol-formaldehyde resin, or urea resin glues as adhesives. Another known technique is to add a foaming agent to an adhesive in order to foam the adhesive composition before its delivery for application in the gluing of woodboard. A preferred known foaming agent used is dried blood. A problem with the use of dried blood are the ethical questions involved. Moreover, when dried blood is used, it may be necessary to add a separate surface tension reducing agent to the adhesive composition in order to achieve the desired properties. A further problem in the use of dried blood is that it is added to the filler or hardener of the adhesive composition in a powdery form, which is why it is difficult to achieve a perfect homogeneity of the composition.

Various other adhesive compositions not containing dried blood as a foaming agent have also been tried in woodboard industry. However, so far no composition of sufficient quality and efficiency has been found that contains no dried blood and has gluing properties and a price and durability suited for use in the manufacture of wood-based boards.

A further problem in the use of prior-art adhesive compositions is their poor durability, which is why the compositions have to be mixed just before use. In addition, the adhesive concentration in prior-art compositions is conventionally low, and therefore eventual impurities can contaminate the adhesive composition more easily.

Further, in prior art, the documents US-A- 4 172 067 andFR-A- 1 243 411 are known.

The object of the present invention is to overcome the above-mentioned drawbacks concerning an adhesive composition in connection with the manufacture of wood-based boards. A specific object of the invention is to disclose a new, more effective and more ethical adhesive composition.

The adhesive composition of the invention is characterized by what is disclosed in the claims.

The invention is based on an adhesive composition used in the manufacture of wood-based boards. The adhesive composition contains resin, a filler, a foaming agent and a solvent, and it is foamable. According to the invention, the adhesive composition contains 40 - 80 w-% resin, 5 - 30 w-% filler, up to 40 w-% solvent and 0.1 - 10 w-% foaming agent, which has been selected from the group benzene sulfate sodium lauryl sulfate, ammonium lauryl sulfate, potassium lauryl sulfate, sodium lauryl ether sulfate, ammonium lauryl ether sulfate, potassium lauryl ether sulfate, sodium isopropyl sulfonate, sodium lauryl sulfonate, sodium benzene sulfonate, sodium alkyl benzene sulfonate, ammonium lauryl phosphate, ammonium lauryl sulfonate, potassium olein sulfate, sodium naphthalene sulfonate and derivatives of these.

The resin, i.e. the actual adhesive used may preferably consist of phenol-formaldehyde resins, urea-formaldehyde resins, amino resins or other corresponding resins. The resin used is UF (urea-formaldehyde resin), MUF (melamine urea-formaldehyde), MUFP, PF (phenol-formaldehyde), PMF or PRF or a derivative or mixture of these or equivalent.

Alternatively, it is possible to use any corresponding surface-active compound as a foaming agent. In this connection, the purpose of the surface-active compound is expressly to promote its foaming.

In a preferred embodiment of the invention, the adhesive composition contains 0.1 - 5 w-% foaming agent.

In an embodiment, the adhesive composition contains 1 - 10 w-% foaming agent, of which 0.1 - 30 w-% is lauryl sulfate, lauryl ether sulfate, benzene sulfate or their compounds, derivatives or mixtures.

In a preferred embodiment of the invention, the adhesive composition contains 50 - 70 w-% resin.

In an embodiment of the invention, the adhesive compostition contains 8-20 w% filler.

In this context, filler refers to a filling agent known in itself

In an embodiment, the filler used is starch, wheat flower, chalk, sodium carbonate, potassium carbonate, calcium carbonate, ammonium sulfate, wood powder, quebracho or a derivative of these or a mixture of these or equivalent. Quebracho means the hard wood material of certain South-American broadleaf trees. Chalk in this connection refers to loose-structured, light and crumbling limestone.

In an embodiment of the invention, the adhesive composition contains 12-35 w-% solvent.

In a preferred embodiment, the solvent is water. The water may be obtained from outside the process or it may be water circulated from within the process, i.e. process wash water. In an alternative embodiment, the solvent is an organic solvent.

In an embodiment of the invention, the adhesive composition contains air, preferably pressurized air, added to it to achieve more effective formation of foam.

In an embodiment, the adhesive composition contains a separate surface-active substance not intended purely for the purpose of foaming, preferably in an amount of 0.1 - 2 w-%.

In an embodiment, the adhesive composition contains a catalyst.

In a preferred embodiment of the invention, the foaming agent is in solid, liquid or paste-like state. In an embodiment, the foaming agent is added as such or in the form of a solution into the adhesive composition.

In a preferred embodiment, the adhesive composition is an emulsion. In an embodiment of the invention, the adhesive composition has been formed by mixing the resin, filler, foaming agent and solvent together to produce an emulsion, e.g. a water emulsion. In an embodiment, the resin, filler, foaming agent and solvent are mixed at a high temperature, e.g. over 40°C.

In an embodiment, the mixture or emulsion has a high adhesive concentration.

The invention makes it possible to produce a more effective and more ethical adhesive composition. The invention has the advantage that a composition having a very good foamability and allowing a very good control of foamability is achieved.

According to the invention, the adhesive composition contains resin, a foaming agent, a solvent and a filler; no separate additives are needed. A further advantage of the invention is that the foaming agent is in liquid phase, allowing a very homogeneous adhesive composition to be produced when the components forming the composition are mixed to form a liquid adhesive mixture.

A further advantage of the invention is that the adhesive has a good and fast spreadability on the surface to be glued. The adhesive is not viscous and it divides easily when being spread. This means a reduced consumption of adhesive.

An additional advantage of the adhesive composition is good durability because adhesive concentration of the composition is substantially higher than in prior-art adhesives and in addition because the adhesive mixture or emulsion has been preferably formed by mixing the liquid components together and cooking the mixture preferably at a relatively high temperature (over 40°C). The adhesive composition is preserved substantially unchanged for as long as several weeks. Moreover, the composition is not sensitive to impurities, microbes or equivalent.

The adhesive composition of the invention is applicable for use in the manufacture of various wood-based boards in different conditions.

In the following, the invention will be described with reference to detailed embodiment examples.

### Example 1

In an experiment, an adhesive composition was prepared. Phenol formaldehyde resin (52 w-%), filling agent (8.7 w-%) and ammonium lauryl sulfate (1.7 w-%) and a solvent (water, 37.3 w-%) were mixed together to form a water mixture. The filling agent was a mixture of calcium carbonate, starch and wheat meal.

The mixture thus produced had good foaming characteristics.

### Example 2

In an experiment, an adhesive composition as in Example 1 was prepared in a corresponding manner. As an exception to Example 1, the ammonium lauryl sulfate used in this experiment was added directly as a water emulsion. The mixture had a composition corresponding to Example 1. The mixture produced had foaming characteristics substantially as good as those of the mixture in Example 1.

### Example 3

In an experiment, phenol formaldehyde resin (50 w-%), filling agent (10 w-%) (as in Example 1), sodium alkyl benzene sulfonate (5.2 w-%) and a solvent (water, 34,8 w-%) were mixed together. The mixture thus produced had a good foamability.

### Example 4

In an experiment, an adhesive composition as in Example 3 was prepared. As an exception to Example 3, the foaming agent used in this experiment was a mixture of sodium alkyl benzene sulfonate and ammonium lauryl sulfonate. In this case, the total amount of foaming agents needed to produce a foam could be halved. In the composition of the mixture thus produced, the water content was 37.4 w-% and the foaming agent content was 2.6 w-%.

As a result, a mixture having a good foamability was achieved.

### Example 5

In an experiment, an adhesive composition was prepared. Phenol-formaldehyde resin (56.8 w-%), filler (18.5 w-%) and ammonium lauryl sulfate (0.5 w-%) and water (24.2 w-%) were mixed together to form a water mixture. The filler was a mixture of starch, chalk, quebracho, potassium carbonate and ammonium sulfate. Alternatively, instead of ammonium lauryl sulfate, it is possible to use sodium lauryl sulfate as a foaming agent.

The mixture thus produced had still better foaming properties and a better stability than the adhesive compositions in examples 1 - 4.

### Example 6

In an experiment, an adhesive composition was prepared. Phenol-formaldehyde resin (65 w-%), filler (11 w-%) and sodium lauryl sulfate (0.9 w-%) and water (23 w-%) were mixed together to form a water mixture. The filler was a mixture of starch and wood powder.

The foaming properties and stability of the mixture thus produced were as good as those of the adhesive composition in example 5.

### Example 7

In an experiment, an adhesive composition was prepared. Phenol-formaldehyde resin (50 w-%), filler (28 w-%), a mixture (0.7 w-%) of sodium lauryl sulfate and sodium lauryl ether sulfate and water (21.3 w-%) were mixed together to form a water mixture. The filler was a mixture of starch, wheat meal, sodium carbonate and calcium carbonate.

The mixture thus produced had good foaming properties and a good stability.

### Example 8

In an experiment, an adhesive composition was prepared. Phenol-formaldehyde resin (67.5 w-%), filler (12.15 w-%) and sodium lauryl ether sulfate (0.35 w-%) and water (20 w-%) were mixed together to form a water mixture. The filler was a mixture of starch, wheat meal and wood powder.

The foaming properties and stability of the mixture thus produced were as good as those of the adhesive compositions in examples 5 and 6.

### Example 9

In an experiment, an adhesive composition was prepared. Phenol-formaldehyde resin (70 w-%), filler (15 w-%) and a foaming agent mixture (3.0 w-%) containing 21 % sodium lauryl sulfate, and water (12 w-%) were mixed together to form a water mixture.

The mixture thus produced had good foaming properties.

The adhesive composition of the invention is suited for use as different applications for the manufacture of various wood-based boards.

The embodiments of the invention are not limited to the examples presented above; instead, they may be varied within the scope of the following claims.

## Claims

1. Adhesive composition for use in the manufacture of wood-based boards, said adhesive composition containing resin, a filler, a foaming agent and a solvent, and said composition being foamable, **characterized in that** the adhesive composition contains 40 - 80 w-% resin selected from the group: UF, MUF, MUFP, PF, PMF, PRF and a derivative of these, 5 - 30 w-% filler, up to 40 w-% solvent, and 0.1 - 10 w-% foaming agent selected from the group: sodium lauryl sulfate, ammonium lauryl sulfate, potassium lauryl sulfate, sodium lauryl ether sulfate, ammonium lauryl ether sulfate, potassium lauryl ether sulfate, benzene sulfate, sodium isopropyl sulfonate, sodium lauryl sulfonate, sodium benzene sulfonate, sodium alkyl benzene sulfonate, ammonium lauryl phosphate, ammonium lauryl sulfonate, potassium olein sulfate, sodium naphthalene sulfonate and derivatives of these.

2. Adhesive composition according to claim 1, **characterized in that** the composition contains 0.1 - 5 w-% foaming agent.

3. Adhesive composition according to claim 1 or 2, **characterized in that** the composition contains 50 - 70 w-% resin.

4. Adhesive composition according to any one of claims 1 - 3, **characterized in that** the composition contains 8 - 20 w-% filler.

5. Adhesive composition according to any one of claims 1 - 4, **characterized in that** the filler has been selected from the group: starch, wheat meal, chalk, sodium carbonate, potassium carbonate, calcium carbonate, ammonium sulfate, wood powder, quebracho and a derivative of these.

6. Adhesive composition according to any one of claims 1 - 5, **characterized in that** the composition contains 12 - 35 w-% solvent.

7. Adhesive composition according to any one of claims 1 - 6, **characterized in that** the solvent is water or an organic solvent.

8. Adhesive composition according to any one of claims 1 - 7, **characterized in that** the adhesive composition contains air added to it.

9. Adhesive composition according to any one of claims 1 - 8, **characterized in that** the foaming agent is in solid, liquid or paste-like state.

10. Adhesive composition according to any one of claims 1 - 9, **characterized in that** the adhesive composition has been produced by mixing the resin, filler, foaming agent and solvent together to form an emulsion.

11. Adhesive composition according to any one of claims 1 - 10, **characterized in that** the adhesive composition has been produced by mixing the resin, filler, foaming agent and solvent together at a temperature of over 40°C.

## Patentansprüche

1. Haftmittelzusammensetzung zur Verwendung bei der Herstellung von Platten auf Holzbasis, wobei die Haftmittelzusammensetzung ein Harz, einen Füllstoff, ein Schäummittel und ein Lösungsmittel enthält, und wobei die Zusammensetzung einen Schaum bilden kann, **dadurch gekennzeichnet, dass** die Haftmittelzusammensetzung 40 bis 80 Gew.-% Harz, das aus der Gruppe UF, MUF, MUFP, PF, PMF, PRF und einem Derivat davon ausgewählt ist, 5 bis 30 Gew.-% Füllstoff, bis zu 40 Gew.-% Lösungsmittel und 0,1 bis 10 Gew.-% Schäummittel, das aus der Gruppe Natriumlaurylsulfat, Ammoniumlaurylsulfat, Kaliumlaurylsulfat, Natriumlaurylethersulfat, Ammoniumlaurylethersulfat, Kaliumlaurylethersulfat, Benzolsulfat, Natriumisopropylsulfonat, Natriumlaurylsulfonat, Natriumbenzolsulfonat, Natriumalkylbenzolsulfonat, Ammoniumlaurylphosphat, Ammoniumlaurylsulfonat, Kaliumoleinsulfat, Natriumnaphthalinsulfonat und Derivaten davon ausgewählt ist, enthält.

2. Haftmittelzusammensetzung nach Anspruch 1, **dadurch gekennzeichnet, dass** die Zusammensetzung 0,1 bis 5 Gew.-% Schäummittel enthält.

3. Haftmittelzusammensetzung nach Anspruch 1 oder 2, **dadurch gekennzeichnet, dass** die Zusammensetzung 50 bis 70 Gew.-% Harz enthält.

4. Haftmittelzusammensetzung nach einem der Ansprüche 1 bis 3, **dadurch gekennzeichnet, dass** die Zusammensetzung 8 bis 20 Gew.-% Füllstoff enthält.

5. Haftmittelzusammensetzung nach einem der Ansprüche 1 bis 4, **dadurch gekennzeichnet, dass** der Füllstoff aus der Gruppe Stärke, Weizenmehl, Kreide, Natriumcarbonat, Kaliumcarbonat, Calciumcarbonat, Ammoniumsulfat, Holzpulver, Quebracho und einem Derivat davon ausgewählt ist.

6. Haftmittelzusammensetzung nach einem der Ansprüche 1 bis 5, **dadurch gekennzeichnet, dass** die Zusammensetzung 12 bis 35 Gew.-% Lösungsmittel enthält.

7. Haftmittelzusammensetzung nach einem der Ansprüche 1 bis 6, **dadurch gekennzeichnet, dass** das Lösungsmittel Wasser oder ein organisches Lösungsmittel ist.

8. Haftmittelzusammensetzung nach einem der Ansprüche 1 bis 7, **dadurch gekennzeichnet, dass** die Haftmittelzusammensetzung Luft enthält, welche dieser zugesetzt worden ist.

9. Haftmittelzusammensetzung nach einem der Ansprüche 1 bis 8, **dadurch gekennzeichnet, dass** das Schäummittel in einem festen, flüssigen oder pastenartigen Zustand vorliegt.

10. Haftmittelzusammensetzung nach einem der Ansprüche 1 bis 9, **dadurch gekennzeichnet, dass** die Haftmittelzusammensetzung durch Mischen des Harzes, des Füllstoffs, des Schäummittels und des Lösungsmittels zur Bildung einer Emulsion hergestellt worden ist.

11. Haftmittelzusammensetzung nach einem der Ansprüche 1 bis 10, **dadurch gekennzeichnet, dass** die Haftmittelzusammensetzung durch Mischen des Harzes, des Füllstoffs, des Schäummittels und des Lösungsmittels bei einer Temperatur von über 40°C hergestellt worden ist.

## Revendications

1. Composition adhésive destinée à la fabrication de planches à base de bois, ladite composition adhésive contenant une résine, un agent de remplissage, un agent moussant et un solvant, et ladite composition étant expansible, **caractérisée en ce que** la composition adhésive contient 40 à 80 % en poids de résine choisie dans le groupe comprenant les UF, MUF, MUFP, PF, PMF, PRF et un dérivé de celles-ci, 5 à 30 % en poids d'un agent de remplissage, jusqu'à 40 % en poids de solvant et 0,1 à 10 % en poids d'agent moussant choisi dans le groupe comprenant le laurylsulfate de sodium, le laurylsulfate d'ammonium, le laurylsulfate de potassium, le lauryléther-sulfate de sodium, le lauryléther-sulfate d'ammonium, le lauryléther-sulfate de potassium, le sulfate de benzène, l'isopropylsulfonate de sodium, le laurylsulfonate de sodium, le benzène-sulfonate de sodium, l'akylbenzène-sulfonate de sodium, le laurylphosphate d'ammonium, le laurylsulfonate d'ammonium, l'oléinesulfate de potassium, le naphtalène-sulfonate de sodium et leurs dérivés.

2. Composition adhésive selon la revendication 1, **caractérisée en ce que** la composition contient 0,1 à 5 % en poids d'agent moussant.

3. Composition adhésive selon la revendication 1 ou 2, **caractérisée en ce que** la composition contient 50 à 70 % en poids de résine.

4. Composition adhésive selon l'une quelconque des revendications 1 à 3, **caractérisée en ce que** la composition contient 8 à 20 % en poids d'agent de remplissage.

5. Composition adhésive selon l'une quelconque des revendications 1 à 4, **caractérisée en ce que** l'agent de remplissage a été choisi dans le groupe comprenant l'amidon, la farine de blé, la craie, le carbonate de sodium, le carbonate de potassium, le carbonate de calcium, le sulfate d'ammonium, la poudre de bois, le quebracho et un dérivé de ceux-ci.

6. Composition adhésive selon l'une quelconque des revendications 1 à 5, **caractérisée en ce que** la composition contient 12 à 35 % en poids de solvant.

7. Composition adhésive selon l'une quelconque des revendications 1 à 6, **caractérisée en ce que** le solvant est l'eau ou un solvant organique.

8. Composition adhésive selon l'une quelconque des revendications 1 à 7, **caractérisée en ce que** la composition adhésive contient de l'air ajouté à celle-ci.

9. Composition adhésive selon l'une quelconque des revendications 1 à 8, **caractérisée en ce que** l'agent moussant est à l'état solide, liquide ou en pâte.

10. Composition adhésive selon l'une quelconque des revendications 1 à 9, **caractérisée en ce que** la composition adhésive a été obtenue en mélangeant la résine, l'agent de remplissage, l'agent moussant et le solvant conjointement pour former une émulsion.

11. Composition adhésive selon l'une quelconque des revendications 1 à 10, **caractérisée en ce que** la composition adhésive a été obtenue en mélangeant la résine, l'agent de remplissage, l'agent moussant et le solvant, conjointement à une température supérieure à 40° C.
